# EUROPEAN PATENT APPLICATION

(11) **EP 1 621 590 A1**
(43) Date of publication of application: **01.02.2006**
(21) Application number: 04723707.8
(22) Date of filing: 26.03.2004
(51) Int. Cl.: C09D 11/00, C09D 131/04, C09D 133/04, C09D 139/00, C09D 201/00, D06M 15/333, D06P 1/52

(54) **COLORING COMPOSITION AND COATING COMPOSITION**

(30) Priority: 26.03.2003 JP 2003086634
(71) Applicant: Denenchofu Roman Co., Ltd., Tokyo 145-0071 (JP)
(72) Inventor: WATANABE, Kazue, Ota-ku, Tokyo 1450071 (JP)
(74) Representative: Makovski, Priscilla Mary
(86) International application number: PCT/JP2004/004283
(87) International publication number: WO 2004/085553

(57) **Abstract**

A water-based coloring composition and a water-based coating composition with each of which the number of operation steps in dyeing, printing, painting, coating or the like can be significantly reduced. The compositions enable functional compounds to be satisfactorily fixed to the substrate to be processed, and attain satisfactory fastness. The compositions do not impair the feeling of the substrate. The water-based coating composition is obtained by mixing an aqueous-emulsion-type acrylic pressure-sensitive adhesive with a cationic water-soluble polymer. The coloring composition, which is for use in dyeing, printing, painting, or coating, is obtained by mixing an aqueous-emulsion-type acrylic pressure-sensitive adhesive with a cationic watersoluble polymer and then mixing the mixture with functional compounds such as a dye, pigment, drug, deodorant, perfume, etc.

## Description

### FIELD OF THE INVENTION

The present invention relates to a water-based coloring composition and a water-based coating composition which can be used for dyeing, printing, painting, coating, or the like.

### BACKGROUND ART

In the field of dyeing using dyes or pigments as colorants, a direct dye, a reactive dye, an acid dye, a disperse dye, a pigment, or the like is used in accordance with a type of a fiber to be dyed. In any case, many postprocessing steps are necessary after the dyeing step and this requires a large amount of labor and, in addition, there are problems such as consumption of a large amount of water, consumption of a large amount of energy for heating and steaming, and increase in an equipment expense and an expenditure for waste fluid processing.

For example, in a dip dyeing type dyeing method using the direct dye or the reactive dye, a cationic dye fixing agent is generally used to improve the fastness (such as water fastness, light fastness, and chlorine fastness) of a substrate to be dyed. However, since either of the dyes is fixed onto the substrate by immersing the substrate into an aqueous solution of the dye fixing agent after the substrate is dyed with the direct dye or the reactive dye, many operation steps are necessary as a whole.

Further, when wool, silk, nylon, or the like is dyed with an acid dye, since tannin treatment is required as postprocessing to improve the water fastness, many operation steps are necessary as a whole.

Furthermore, an acrylic emulsion might be used as a gluing material or a binder in a printing ink containing a pigment as a colorant. In this case however, since the pigment needs to be fixed onto the substrate to be dyed by postprocessing such as steaming after the substrate is dyed with the ink, many operation steps are necessary as a whole.

On the other hand, an acrylic copolymer emulsion is extensively used as a finishing agent or a peeling preventive agent to improve of the feeling of yarn or wooL However, a conventional finishing agent having an excellent adhesion property of a coating film formed of the finishing agent disadvantageously impairs the feeling of the yarn or the wool. On the other hand, a finishing agent capable of maintaining the feeling of the yarn or the wool disadvantageously has a poor adhesion property.

When a dye is mixed with a dye fixing agent before dyeing a fiber, linkage of the dye with the dye fixing agent causes agglomeration. As a result, the fiber cannot be dyed with the dye anymore and so the dye can neither be used as a colorant nor as an ink. Further, even when the fiber is dyed with an aqueous-emulsion-type acrylic pressure-sensitive adhesive mixed with the dye, a satisfactory water fastness cannot be obtained.

Accordingly, an object of the present invention is to provide a coloring composition and waterbased coating composition with each of which the number of operation steps in dyeing, printing, painting, coating or the like can be significantly reduced. The compositions enable functional compounds to be satisfactorily fixed to the substrate to be processed, and attain satisfactory fastness.

Another object of the present invention is to provide a water-based coating composition with which the number of operation steps for coating treatment can be significantly reduced. The composition enables the composition to be satisfactorily fixed to a yarn or wool product, attain satisfactory fastness, and suppress pilling without impairing the feeling of the yarn or wool product.

### DISCLOSURE OF THE INVENTION

As a result of an energetic study, the present inventor surprisingly found that a water-based coloring composition having remarkably excellent fastness and dyeing property can be obtained by mixing an aqueous-emulsion-type acrylic pressure-sensitive adhesive with a cationic water-soluble polymer and then mixing the mixture with a dye.

When a substrate is dyed using the coloring composition containing this dye, although the coloring composition is water based, a color scarcely bleeds. Further, in a state where water contained in the coloring composition has been evaporated, the dyed substrate yields a good color and exhibits satisfactory water fastness without impairing the feeling thereof. Accordingly, a step of dyeing the substrate with the coloring composition can be usually completed only by drying the substrate as is.

The present inventor further found that a waterbased coloring composition having excellent fastness and dyeing property as well can be obtained by mixing the aqueous-emulsion-type acrylic pressure-sensitive adhesive with the cationic water-soluble polymer and then mixing the mixture with a pigment. The adhesion property of the pigment contained in the coloring composition onto a substrate to be dyed is remarkably improved as compared with a coloring composition provided by simply mixing an aqueous-emulsion-type acrylic pressure-sensitive adhesive and a pigment.

Further, when a substrate is dyed with the coloring composition containing the pigment, although the coloring composition is water based, a color scarcely bleeds. In a state where water contained in the coloring composition has been evaporated, the dyed substrate yields a good color and exhibits satisfactory water fastness without impairing the feeling thereof. Accordingly, a step of dyeing the substrate with the coloring composition can be usually completed only by drying the substrate as is.

Furthermore, the coloring composition containing the pigment can be used to dye any fiber structure without placing limitation on types of fibers. Further, the surfaces of paper, wood, stone, glass, plastic, or the like can also be dyed easily and firmly with the coloring composition.

Furthermore, the solvent prepared by mixing the aqueous-emulsion-type acrylic pressure-sensitive adhesive with the cationic water-soluble polymer has excellent adhesion property onto a member to be dyed and further, when the water contained in the solvent is evaporated, a polymer resin film having excellent flexibility, transparency, gloss, and repellency is formed. Accordingly, the present inventor found that the solvent is appropriate as a coating agent and, in particular, is effective as a coating agent for prevention of pilling on a yarn product, a wool product, or the like.

The present inventor further found that, when the aqueous-emulsion-type acrylic pressure-sensitive adhesive is mixed with the cationic water-soluble polymer then the mixture is mixed with other functional compounds, for example, a drug, a perfume, a deodorant, or the like together with or without a dye or a pigment, a coloring composition capable of exhibiting the effects of the functional compounds can be obtained.

Thus, according to the present invention, there is provided the coloring composition for dyeing, printing, painting, or coating containing an aqueous-emulsion-type acrylic pressure-sensitive adhesive and functional compounds such as a cationic water-soluble polymer, dye, pigment, drug, deodorant, perfume, or the like, the coloring composition being provided by mixing the aqueous-emulsion-type acrylic pressure-sensitive adhesive with the cationic water-soluble polymer and then mixing the mixture with the functional compounds.

The aqueous-emulsion-type acrylic pressure-sensitive adhesive in the coating composition in the coloring composition preferably comprises an aqueous medium and a resin, and the resin preferably contains an acrylic monomer and a vinyl acetate monomer as polymeric monomer components.

Further preferably, the aqueous-emulsion-type acrylic pressure-sensitive adhesive in the coloring composition comprises an aqueous medium and a resin, and the resin preferably contains ethylene and a vinyl acetate monomer as polymeric monomer components.

Further preferably, the particle charge of the aqueous-emulsion-type acrylic pressure-sensitive adhesive in the coloring composition is anionic,

Further preferably, the functional compounds in the coloring composition are anionic in the aqueous medium.

Further preferably, the cationic water-soluble polymer in the coloring composition comprises a monoarylamine derivative represented by the following formula or a polymer of a salt thereof, or copolymer of a monoarylamine derivative or a polymer of a salt thereof and a monomer having unsaturated double bond copolymerizable with the polymers:

CH₂ = CH - CH₂ - NHR

(wherein R represents a hydrogen atom, an alkyl group having 1 to 18 carbon atoms, a substituted alkyl group, an aralkyl group, or a cycloalkyl group.)

An aqueous solution of polycation described in Japanese Patent Laid-Open No. 80681/1990 as an example, in particular, an aqueous solution of polycation having the molecular structure represented by formula (1) or (2) can suitably be used as the cationic water-soluble polymer.

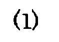

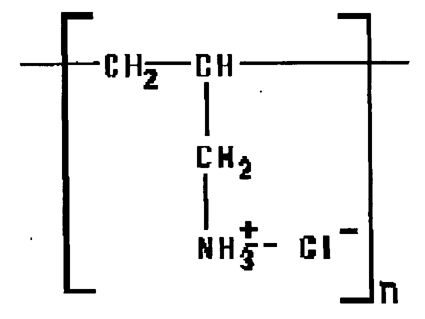

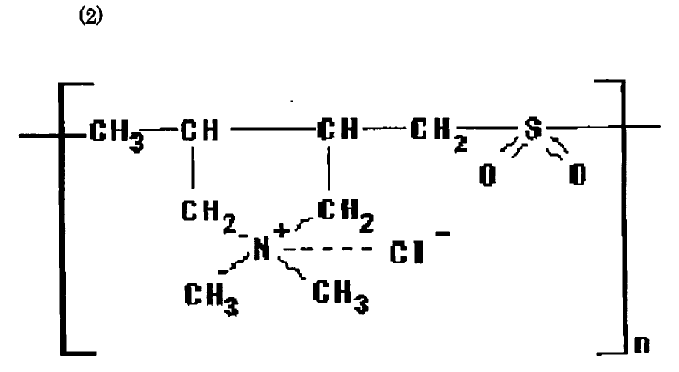

Further, according to the present invention, there is provided a coating composition prepared by mixing an aqueous-emulsion-type acrylic pressure-sensitive adhesive with a cationic water-soluble polymer.

Further, according to the present invention, the aqueous-emulsion-type acrylic pressure-sensitive adhesive in the coating composition comprises an aqueous medium and a resin, and the resin contains an ethylene and a vinyl acetate monomers as polymeric monomer components.

Further preferably, the particle charge of the aqueous-emulsion-type acrylic pressure-sensitive adhesive in the coating composition is anionic.

Further preferably, the functional compounds in the coating composition is anionic in the aqueous medium.

Further preferably, the cationic water-soluble polymer in the coating composition comprises a monoary lamine derivative represented by the following formula or a polymer of a salt thereof, or copolymer of a monoarylamine derivative or a polymer of a salt thereof and a monomer having unsaturated double bond copolymerizable with the polymers:

CH₂ = CH - CH2 - NHR

(wherein R represents a hydrogen atom, an alkyl group having 1 to 18 carbon atoms, a substituted alkyl group, an aralkyl group, or a cycloalkyl group.)

An aqueous solution of polycation described in Japanese Patent Laid-Open No. 80681/1990 as an example, in particular, an aqueous solution of polycation having the molecular structure represented by formula (3) or (4) can suitably be used as the cationic water-soluble polymer.

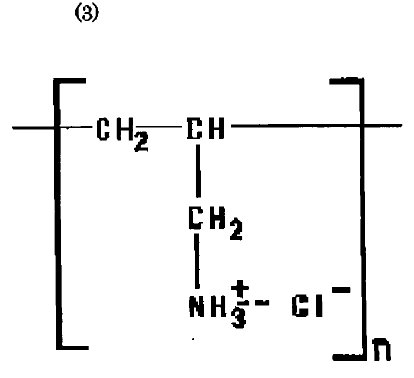

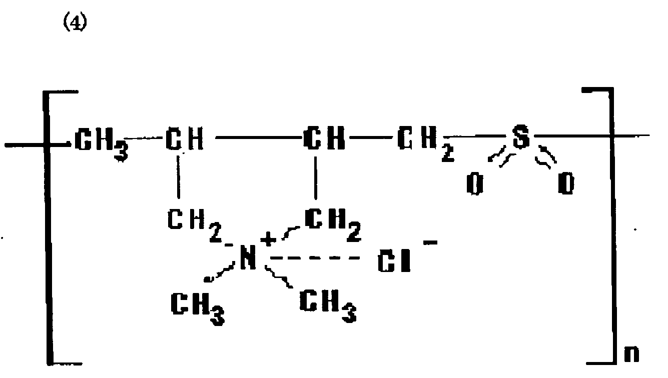

The aqueous-emulsion-type acrylic pressure-sensitive adhesive preferably comprises 45 to 50% by weight of an aqueous medium and 60 to 55% by weight of a resin, and has a viscosity of 6,000 to 10,000 mPa·s/30°C and a mean particle diameter 0.2 to 0.6 µm. When the aqueous-emulsion-type acrylic pressure-sensitive adhesive is mixed with the cationic water-soluble polymer, 10 to 50% by weight of the aqueous-emulsion-type acrylic pressure-sensitive adhesive is preferably mixed with 50 to 90% by weight of the cationic water-soluble polymer. When the mixture of the aqueous-emulsion-type acrylic pressure-sensitive adhesive and the cationic water-soluble polymer is mixed with functional compounds such as a dye, pigment, medial agent, fragrance, or deodorant, and a functional compound used herein is readily soluble in an aqueous medium, the functional compound is dissolved in a suitable amount of the aqueous medium to prepare an aqueous solution and then the solution is mixed with the mixture of the aqueous-emulsion-type acrylic pressure-sensitive adhesive and the cationic water-soluble polymer. On the other hand, when a functional compound used herein is insoluble in an aqueous medium, the functional compound is evenly dispersed in a suitable amount of the aqueous medium and then the solution is mixed with the mixture of the aqueous-emulsion-type acrylic pressure-sensitive adhesive and the cationic water-soluble polymer. Thereafter, the mixture can be diluted with a suitable amount of an aqueous medium, if necessary, to be used as a coloring composition for dyeing, printing, painting, coating, or the like.

The resin component of the aqueous-emulsion-type acrylic pressure-sensitive adhesive is not particularly limited, but is preferably a copolymer of one type or two or more types of acrylic monomers and vinyl acetate monomer, a copolymer of one type or two or more types of acrylic monomers, or a copolymer or a mixture of a copolymer and a vinyl acetate polymer.

The copolymer is not particularly limited, but is preferably the one obtained by emulsion polymerization with a monomer, an emulsifying agent, or a water system.

Specific examples of the acrylic monomers include: methyl acrylate, ethyl acrylate, butyl acrylate, 2-ethylhexyl acrylate, hexyl acrylate, heptyl acrylate, octyl acrylate, octadecile acrylate, methyl methacrylate, glycidyl metacrylate, hexyl methacrylate, heptyl methacrylate, octyl methacrylate, octadecile methacrylate, and ethyl hydroxymethacrylate.

As the emulsifying agent, an anionic surfactant selected from the group consisting of fatty acid salts, higher alcohol sulfate, alkylbenzenesulfonate, alkylnaphthalene sulfonate, alkyl phosphate, alkylphenylpolyoxyethylene sulfate, or the like can be used. Further, if necessary, a nonionic surfactant selected from the group consisting of polyoxyethylenealkyl ester, polyoxyethylenealkyl ether, polyoxyethylene alkylphenyl ether, or the like may be added. Further, a polymerization catalyst is not particularly limited, but a persulfuric acid salt such as potassium persulfate or ammonium persulfate can be selected as the polymerization catalyst. Furthermore, if necessary, a small amount of an additive such as a thickening agent, fixing agent, or an antiseptic agent may be added at the time of polymerization.

The aqueous-emulsion-type acrylic pressure-sensitive adhesive preferably has a viscosity of 5,000 to 20,000 mPa·s/30°C and a mean particle diameter of 0.1 to 1 µm. Further, the preferable glass transition temperature of the aqueous-emulsion-type acrylic presaure-sensitive adhesive is -20 to -60 °C, and the preferable minimum filin-forming temperature thereof is -5 to 5°C. Further, the pH value of the aqueous emulsion of the acrylic pressure-sensitive adhesive is preferably adjusted to 4 to 8.

The type of the dye is not particularly limited, but a direct dye or a reactive dye having an acid group such as a sulfonic group or carboxyl group. Further, the pigment can optionally be selected from the group of an organic pigment, an inorganic pigment, or the like. However, a pigment having dispersibility in water by adding an anionic group to the surface thereof or by using an anionic surfactant is preferable. Further, the pigment preferably has as a uniform particle diameter as possible and as a small mean particle diameter as possible (not more than 0.2 µm, preferably not more than 0.1 µm, more preferably not more than 0.08 µm). However, when the mean particle diameter of the pigment is smaller than 0.02 µm, it is hard to obtain a satisfactory color density, and so the mean particle diameter is preferably not less than 0.02 µm.

Furthermore, the aqueous medium can be selected from water or a compound of water and a water-soluble compound (e.g., polyvalent alcohol).

### BEST MODE FOR CARRYING OUT THE INVENTION

### EXAMPLE 1

The aqueous-emulsion-type acrylic pressure-sensitive adhesive containing about 45% by weight of water and about 55% by weight of a resin component was used, and the resin component thereof was a copolymer containing ester acrylate and vinyl acetate as polymeric components. Further, the viscosity of the aqueous-emulsion-type acrylic pressure-sensitive adhesive was 8,000 mPa·s/30°C and the mean particle diameter of the same was 0.2 to 0.5 µm.

The cationic water-soluble polymer used was an aqueous solution of polycation (product name: DANFIX-723) manufactured by Nitto Boseki Co., Ltd. specifically having the following molecular structure.

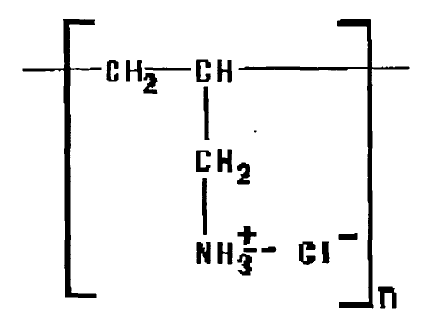

The aqueous-emulsion-type acrylic pressure-sensitave adhesive was mixed substantially evenly with the aqueous solution of polycation at a weight ratio of 1 : 5 and then the mixture was mixed substantially evenly with an aqueous solution prepared by dissolving a direct dye in a suitable amount of water to obtain a coloring composition. The coloring composition was further diluted with water to about ten times as much to obtain an ink liquid.

### COMPARATIVE EXAMPLE 1

The aqueous-emulsion-type acrylic pressure-sensitive adhesive used has the same compositions as those in Example 1 except that it does not contain the cationic water-soluble polymer. The aqueous-emulsion-type acrylic pressure-sensitive adhesive was mixed with an aqueous solution prepared by dissolving a direct dye in a suitable amount of water to obtain a water-based coloring composition. The coloring composition was further diluted with water to about ten time as much to obtain an ink liquid.

A paint-brush was used to paint (dye) a woven cloth of a cotton fiber, a textile of a wool fiber, a textile of a nylon fiber, a textile of an acrylic fiber, paper, and a glass plate as substrates with the ink liquid of Example 1 and the ink liquid of Comparative Example 1, respectively, and then the substrates were dried naturally at a room temperature.

The table below shows results of dyeing a woven cloth of a cotton fiber, a textile of a wool fiber, a textile of a nylon fiber, a textile of an acrylic fiber, paper, and a glass plate as substrates with the ink liquids of Example 1 and Comparative Example 1, respectively.

**[TABLE 1]**

| | Example 1 | Comparative Example 1 |
|---|---|---|
| Color bleeding: | O | △ |
| Water fastness: | O | × |
| Color sharpness: | O | △ |
| Gloss: | O | O |
| Repellency: | O | △ |
| Feeling: | O | O |
| Whitening: | O | O |

Here, as for color bleeding at the time of applying the ink liquid, O indicates that a color ink scarcely bled, △ indicates that a color ink somewhat bled, and × indicates that a color ink significantly bled. Further, as for the water fastness, O indicates that a color scarcely faded after the naturally dried substrate was washed in a washing machine for 5 min., △ indicates that a color somewhat faded, and × indicates that a color significantly faded. Further, as for a sharpness, a gloss, repellency, and feeling of a color on a dyed and dried surface, O indicates that the surface showed good features and x indicates that the surface showed poor features. Further, as for whitening of a dried film, O indicates that the film was not whitened and × indicates that the film was whitened.

As apparent from the above comparison results, the dye ink liquid of Example 1 is extremely excellent as a whole.

### EXAMPLE 2

The aqueous-emulsion-type acrylic pressure-sensitive adhesive used contained about 45% by weight of water and about 55% by weight of the resin component, and the resin component was a copolymer containing ester acrylate and vinyl acetate as polymeric components. Further, the viscosity of the aqueous-emulsion-type acrylic pressure-sensitive adhesive was 8,000 mPa·s/30°C and the mean particle diameter of the same was 0.2 to 0.5 µm.

The cationic water-soluble polymer used was an aqueous solution of polycation having a pH value of 1.5 to 3.5, a specific gravity of about 1.13/20°C, and a viscosity of about 5 mPa·s/20°C. Specifically, an aqueous solution of polycation (product name: DANFIX-723) manufactured by Nitto Boseki Co., Ltd. was used.

The aqueous-emulsion-type acrylic pressure-sensitive adhesive was mixed substantially evenly with the aqueous solution of polycation at a weight ratio of about 1 : 5 and then the mixture was mixed substantially evenly with a pigment liquid prepared by dispersing a pigment powder in a suitable amount of water to obtain a water-based coloring composition. The coloring composition was further diluted with water to about ten times as much to obtain an ink liquid.

### COMPARATIVE EXAMPLE 2

The aqueous-emulsion-type pressure-sensitive adhesive used has the same compositions as those in Example 2. The aqueous-emulsion-type pressure-sensitive adhesive was mixed substantially evenly with a pigment liquid prepared by dispersing a pigment powder in a suitable amount of water to obtain a water-base coloring composition. The coloring composition was further diluted with water to about ten times as much to obtain an ink liquid.

A paint-brush was used to paint (dye) a woven cloth of a cotton fiber, a textile of a wool fiber, a textile of a nylon fiber, a textile of an acrylic fiber, paper, and a glass plate as substrates with the ink liquid of Example 2 and the ink liquid of Comparative Example 2, respectively, and then the substrates were dried naturally at a room temperature.

The table below shows results of dyeing a woven cloth of a cotton fiber, a textile of a wool fiber, a textile of a nylon fiber, a textile of an acrylic fiber, paper, and a glass plate as substrates with the ink liquids of Example 2 and Comparative Example 2, respectively.

**[TABLE 2]**

| | Example 2 | Comparative Example 2 |
|---|---|---|
| Color bleeding: | O | △ |
| Water fastness: | O | × |
| Color sharpness: | O | △ |
| Gloss: | O | O |
| Repellency: | O | △ |
| Feeling: | O | O |
| Whitening: | O | O |

Here, as for color bleeding at the time of applying the ink liquid, O indicates that the color scarcely bled, △ indicates that the color somewhat bled, and × indicates that the color significantly bled. Further, as for the water fastness, O indicates that the color scarcely faded after the naturally dried substrate was washed in a washing machine for five minutes, △ indicates that the color somewhat faded, and × indicates that the color significantly faded. Further, as for a sharpness, a gloss, repellency, and feeling of a color on a dyed and dried surface, O indicates that the surface showed good features and × indicates that the surface showed poor features. Further, as for whitening of a dried film, Oindicates that the film was not whitened and × indicates that the film was whitened.

As apparent from the above comparison results, the dye ink liquid of Example 2 is extremely excellent as a whole.

### EXAMPLE 3

The aqueous-emulsion-type acrylic pressure-sensitive adhesive used contained about 45% by weight of water and about 55% by weight of the resin component, and the resin component was a copolymer containing ester acrylate and vinyl acetate as polymeric components. Further, the viscosity of the aqueous-emulsion-type acrylic pressure-sensitive adhesive was 8,000 mPa·s/30°C and the mean particle diameter of the same was 0.2 to 0.5 µm.

The cationic water-soluble polymer used was an aqueous solution of polycation having a pH value of 1.5 to 3.5, a specific gravity of about 1.13/20°C, and a viscosity of about 5 mPa·s/20°C. Specifically, an aqueous solution of polycation (product name: DANFIX-723) manufactured by Nitto Boseki Co., Ltd. was used.

The aqueous-emulsion-type acrylic pressure-sensitive adhesive was mixed substantially evenly with the aqueous solution of polycation at a weight ratio of about 1 : 5 and then the mixture was further diluted with water to about 100 times as much to obtain a coating liquid.

### COMPARATIVE EXAMPLE 3

The aqueous-emulsion-type pressure-sensitive adhesive used has the same compositions as those in Example 2. The aqueous-emulaion-type pressure-sensitive adhesive was further diluted with water to about 100 times as much to obtain a coating liquid.

A textile of a wool fiber was immersed in the coating liquid of Example 3 and the coating liquid of Comparative Example 3 and then dried naturally at a room temperature.

Table 3 shows results of forming a film by using the coating liquid of Example 3 and the coating liquid of Comparative Example 3.

**[TABLE 3]**

| | Example 3 | Comparative Example 3 |
|---|---|---|
| Water fastness: | O | × |
| Gloss: | O | O |
| Repellency: | O | Δ |
| Feeling: | O | O |
| Whitening: | O | O |
| Pilling: | O | × |

Here, as for the water fastness, O indicates that the film is scarcely peeled off after the naturally dried substrate was washed in a washing machine for five minutes, △ indicates that the film was partly peeled off, and × indicates that the film was significantly peeled off. Further, as for a sharpness, a gloss, repellency, and feeling of a coated and dried surface, O indicates that the surface showed good features and × indicates that the surface showed poor features. Further, as for whitening of a dried film, O indicates that the film was not whitened and × indicates that the film was whitened. As for the pilling, O indicates that no pilling occurred when surface of coated films were rubbed together and × indicates that pilling occurred.

As apparent from the above comparison results, the coating liquid of Example 3 exhibited a good effect of pilling prevention as compared with the coating liquid comprising only the aqueous-emulsion-type acrylic pressure-sensitive adhesive.

In addition, even when the mixing ratio of the aqueous-emulsion-type acrylic pressure-sensitive adhesive in any one of Examples 1 to 3 and the aqueous solution of polycation was changed to about 1 : 1 to 1 : 10, substantially the same results as those in Examples 1 to 3 were attained. Even when the degree of the dilution of the ink liquid or the coating liquid in any one of Examples 1 to 3 with water was changed from 100 times to 200 to 500 times, it was found that substantially the same results as those in Examples 1 to 3 were achieved.

Furthermore, the aqueous-emulsion-type acrylic pressure-sensitive adhesive was mixed substantially evenly with the aqueous solution of polycation at a weight ratio of 1 : 5, then the mixture was mixed substantially evenly with suitable amounts of an aqueous perfume, deodorant, drug, or the like to prepare an aqueous coating composition, and the coating composition was further diluted with water to 100 times as much to obtain a coating liquid. When textiles of various types of fibers were coated with the coating liquid and dried naturally at a room temperature, it was confirmed that effects of the functional compounds such as the perfume, deodorant, drug, or the like were exhibited.

Furthermore, when an aqueous-emulsion-type acrylic pressure-sensitive adhesive comprising a resin component of an ethylene-vinyl acetate copolymer was used instead of an aqueous-emulsion-type acrylic pressure-sensitive adhesive comprising a resin component of an acrylic resin-vinyl acetate copolymer as a modification of any one of Examples 1 to 3, it was confirmed that a coloring composition or a coating composition enabling attainment of primary objects of the present invention could be obtained although the feeling and water fastness of a substrate were somewhat deteriorated.

### INDUSTRIAL APPLICABILITY

As is cleared from the above description, according to the present invention, the number of operation steps such as dyeing, printing, painting, and coating can be significantly reduced and, moreover, it is possible to provide the water-based coating composition which enables functional compounds to be satisfactorily fixed to a substrate to be processed.

Further, according to the present invention, the number of operation steps such as coating can be significantly reduced and, moreover, it is possible to provide the waterbased coating composition which enables the composition to be satisfactorily fixed to a yarn or wool product and suppresses pilling without impairing the feeling of a yarn or wool product.

## Claims

1. A coloring composition for dyeing, printing, or coating comprising:
an aqueous-emulsion-type acrylic pressure-sensitive adhesive;
a cationic water-soluble polymer; and
functional compounds such as a dye, pigment, drug, deodorant, perfume, or the like,
said coloring composition being obtained by mixing said aqueous-emulsion-type acrylic preseure-sensitive adhesive with said cationic water-soluble polymer and then mixing a resultant mixture with said functional compounds.

2. A coloring composition according to claim 1, wherein said aqueous-emulsion-type acrylic pressure-sensitive adhesive comprises an aqueous medium and a resin component, and said resin component contains an acrylic monomer and a vinyl acetate monomer as polymeric monomer components.

3. A coloring composition according to claim 1, wherein said aqueous-emulsion-type acrylic pressure-sensitive adhesive comprises an aqueous medium and a resin component, and said resin component contains ethylene and a vinyl acetate monomer as polymeric monomer components.

4. A coloring composition according to claim 1, wherein a particle charge of said aqueous-emulsion-type acrylic pressure-sensitive adhesive is anionic.

5. A coloring composition according to claim 1, wherein said functional compounds are anionic in an aqueous medium.

6. A coloring composition according to claim 1, wherein said cationic water-soluble polymer comprises a monoarylamine derivative represented by the following formula or a polymer of a salt thereof, or copolymer of a monoarylamine derivative or a polymer of a salt thereof and a monomer having unsaturated double bond copolymerizable with said polymers:
CH₂= CH - CH₂ - NHR
(wherein R represents a hydrogen atom, an alkyl group having 1 to 18 carbon atoms, a substituted alkyl group, an aralkyl group, or a cycloalkyl group.)

7. A coating composition obtained by mixing an aqueous-emulsion-type acrylic pressure-sensitive adhesive with a cationic water-soluble polymer.

8. A coating composition according to claim 7, wherein said aqueous-emulsion-type acrylic pressure-sensitive adhesive consists of an aqueous medium and a resin component, and said resin component contains an acrylic monomer and a vinyl acetate monomer as polymeric monomer components.

9. A coating composition according to claim 1, wherein said aqueous-emulsion-type acrylic pressure-sensitive adhesive consists of an aqueous medium and a resin component, and said resin component contains ethylene and a vinyl acetate monomer as polymeric monomer components.

10. A coating composition according to claim 7, wherein a particle charge of said aqueous-emulsion-type acrylic pressure-sensitive adhesive is anionic.

11. A coating composition according to claim 7, wherein said cationic water soluble polymer comprises a monoarylamine derivative represented by the following formula or a polymer of a salt thereof, or copolymer of a monoarylamine derivative or a polymer of a salt thereof and a monomer having unsaturated double bond copolymerizable with said polymers:
CH₂ = CH - CH2 - NHR
(wherein R represents a hydrogen atom, an alkyl group having 1 to 18 carbon atoms, a substituted alkyl group, an aralkyl group, or a cycloalkyl group.)
